# EUROPÄISCHE PATENTANMELDUNG

(11) **EP 1 102 434 A2**
(43) Veröffentlichungstag der Anmeldung: **23.05.2001**
(21) Anmeldenummer: 00120338.9
(22) Anmeldetag: 16.09.2000
(51) Int. Cl.: H04L 12/28, B60R 16/02, G07C 5/00

(54) **Verfahren zum Datenaustausch für eine Multimediaanlage sowie Multimediaanlage für ein Fahrzeug**

(30) Priorität: 15.11.1999 DE 19954758
(71) Anmelder: BECKER GmbH, D-76307 Karlsbad (DE)
(72) Erfinder: Wolf, Stefan, 64367 Mühltal (DE); Lappe, Dirk, 76228 Karlsruhe (DE)
(74) Vertreter: Patentanwälte Westphal, Mussgnug & Partner

(57) **Zusammenfassung**

In einer Multimediaanlage (MM) für ein Fahrzeug sind mehrere Einheiten (E1, E2, E3, E4, E5) über einen als Ringleitung (OB) verlegten optischen Datenbus miteinander verbunden. Mittels einer an beliebiger Stelle in der Ringleitung (OB) liegenden oder in einer Einheit (E5) integrierten Schnittstelleneinheit (SE) läßt sich eine Funkverbindung zwischen der Multimediaanlage (MM) und einer externen Einheit (EE) aufbauen, die z. B. Verkehrsinformationen aussendet.

## Beschreibung

Die Erfindung betrifft ein Verfahren zum Datenaustausch für eine Multimediaanlage für ein Fahrzeug mit mehreren Einheiten, die über einen als Ringleitung im Fahrzeug verlegten optischen Datenbus miteinander verbunden sind.

Die Erfindung betrifft weiter eine Multimediaanalge für ein Fahrzeug mit mehreren Einheiten, die über einen als Ringleitung im Fahrzeug verlegten optischen Datenbus miteinander verbunden sind.

Multimediaanalgen gehören in der gehobenen Kraftfahrzeugklasse bereits zum Standard. In einer Multimediaanlage für ein Kraftfahrzeug sind mehrere Einheiten über einen als Ringleitung im Kraftfahrzeug verlegten optischen Datenbus miteinander verbunden, so dass ein Datenaustausch zwischen beliebigen Einheiten der Ringleitung möglich ist.

Komfortable moderne Multimediaanlagen für Fahrzeuge sind zum Beispiel mit einer Audioanlage bestehend aus einer Hörfunkempfangsanlage, einem Kassettengerät, einem Audio-CD-Spieler und Lautsprechern, mit einer Fernsehempfangsanlage, mit einer Videoanlage, mit einem DVD-Spieler, mit einer Navigationsanlage, mit einem Funktelefon, mit einem Faxgerät, mit einem Bordcomputer, mit einer Tasteneingabevorrichtung und mit einem Bildschirm ausgestattet, eine bereits stattliche Anzahl an Einheiten, die in Zukunft noch zunehmen wird.

Es ist daher Aufgabe der Erfindung, ein Verfahren zum Datenaustausch für eine Multimediaanlage für ein Fahrzeug bzw. eine Multimediaanlage für ein Fahrzeug so zu gestalten, dass der Datenaustausch zwischen den Einheiten der Multimediaanlage vereinfacht wird sowie zusätzliche Leistungsmerkmale der Multimediaanlage geschaffen werden.

Verfahrensmäßig wird diese Aufgabe mit den im Anspruch 1 angegebenen Merkmalen dadurch gelöst, dass eine an beliebiger Stelle in der Ringleitung liegende Schnittstelleneinheit eine Funkverbindung von der Multimediaanlage zu einer externen Einheit aufbaut.

Vorrichtungsmäßig wird diese Aufgabe gemäß den im Anspruch 6 angegebenen Merkmalen dadurch gelöst, dass mittels einer an beliebiger Stelle in der Ringleitung liegender Schnittstelleneinheit eine Funkverbindung zu einer externen Einheit aufbaubar ist.

Das erfindungsgemäße Verfahren sowie die erfindungsgemäße Multimediaanlage werden nachstehend anhand der Figuren näher beschrieben und erläutert.

In der Zeichnung zeigen:
- Fig. 1: ein erstes Ausführungsbeispiel einer erfindungsgemäßen Multimediaanlage und
- Fig. 2: ein zweites Ausführungsbeispiel einer erfindungsgemäßen Multimediaanlage.

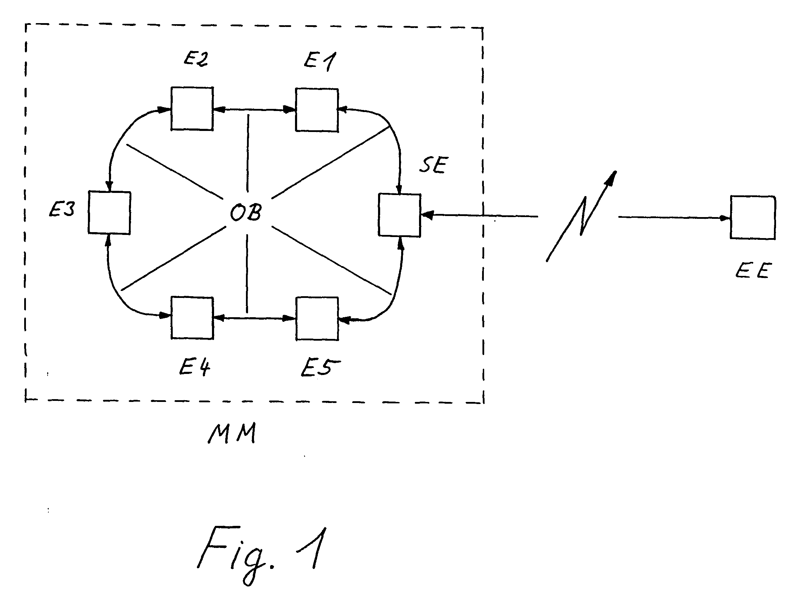

Bei der in der Fig. 1 gezeigten Multimediaanlage MM sind mehrere Einheiten E1 bis E5 sowie eine Schnittstelleneinheit SE über eine Ringleitung OB miteinander verbunden, die als optischer Datenbus ausgeführt ist. Auf Anfrage einer der Einheiten E1 bis E5 stellt die Schnittstelleneinheit SE eine Funkverbindung zu einer externen Einheit EE her. Die von der externen Einheit EE zur Multimediaanlage MM gesendeten Daten werden von der Schnittstelleneinheit SE empfangen und an die entsprechende Einheit über die Ringleitung OB weitergeleitet.

Die Schnittstelleneinheit SE kann an beliebiger Stelle in der Ringleitung OB angeordnet sein.

Die Schnittstelleneinheit SE koordiniert Anfragen der in der Ringleitung OB liegenden Einheiten E1 bis E5 nach einer Funkverbindung zur externen Einheit EE. Werden gleichzeitig mehrere Anfragen von mehreren in der Ringleitung liegenden Einheiten nach einer Funkverbindung zur externen Einheit EE an die Schnittstelleneinheit SE gestellt, so bestimmt die Schnittstelleneinheit SE die Reihenfolge der abzuarbeitenden Anfrage nach einem vorgebbaren Verfahren. Beispielsweise kann die Schnittstelleneinheit SE die Reihenfolge der abzuarbeitenden Anfragen nach der Reihenfolge der anfragenden Einheiten in er Ringleitung OB bestimmen. Sie kann aber auch die Reihenfolge der anfragenden Einheiten nach dem Zufallsprinzip auswählen.

Die externe Einheit EE kann z. B. eine Dienstleistungseinheit sein, die Verkehrsinformationen aussendet. Wenn die Multimediaanlage MM z. B. mit einer Navigationsanlage ausgerüstet ist, kann der Bediener über die Navigationsanlage bei der externen Einheit EE Verkehrsinformationen anfordern. Es ist aber auch eine Datenübertragung in umgekehrter Richtung möglich. So kann beispielsweise der Bediener die Verkehrsverhältnisse vor Ort beschreibende Informationen über die Schnittstelleneinheit SE zur externen Einheit EE senden, welche diese aktuellen vor Ort gewonnenen Informationen verarbeiten kann, um der anfragenden Multimediaanlage auf die augenblicklich vor Ort herrschende Verkehrslage angepaßte Informationen und Anweisungen zu geben.

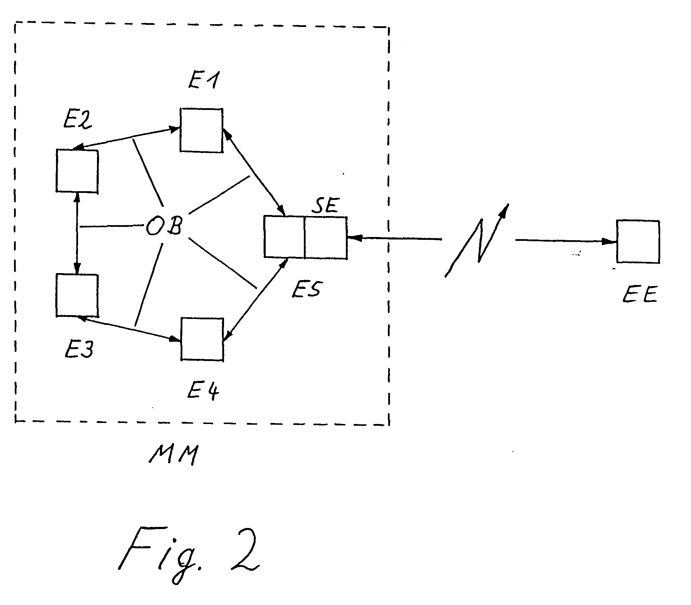

In der Fig. 2 ist ein zweites Ausführungsbeispiel einer erfindungsgemäßen Multimediaanlage abgebildet, bei der die Schnittstelleneinheit SE nicht gesondert in der Ringleitung OB angeordnet, sondern in einer der Einheiten, z. B. der Einheit E5, integriert ist.

Ein wesentlicher Vorteil des erfindungsgemäßen Verfahrens bzw. der erfindungsgemäßen Multimediaanlage liegt darin, dass bei der Datenübertragung zwischen der Multimediaanlage und der externen Einheit die externe Einheit stets dieselbe Schnittstelle, nämlich die Schnittstelleneinheit SE sieht, unabhängig davon, mit welcher Einheit der Ringleitung OB Sie augenblicklich kommuniziert.

In der erfindungsgemäßen Multimediaanlage für Fahrzeuge können technische Systeme wie z. B. die Media-Orientated-System-Transfer, abgekürzt MOST, die General Packet Radio Services, abgekürzt, GPRS, das Universal Mobile Telephone System, abgekürzt UMTS und die Short Message Services, abgekürzt SMS, integriert sein, jedoch ist die erfindungsgemäße Multimediaanlage nicht auf diese Systeme beschränkt.

### Bezugszeichenliste

- EE: externe Einheit
- E1 bis E5: Einheit
- MM: Multimediaanlage
- OB: Optischer Datenbus, Ringleitung
- SE: Schnittstelleneinheit

## Patentansprüche

1. Verfahren zum Datenaustausch für eine Multimediaanalge (MM) für ein Fahrzeug mit mehreren Einheiten (E1, E2, E3, E4, E5), die über einen als Ringleitung (OB) im Fahrzeug verlegten optischen Datenbus (OB) miteinander verbunden sind,
**dadurch gekennzeichnet**, dass eine an beliebiger Stelle in der Ringleitung (OB) liegende Schnittstelleneinheit (SE) eine Funkverbindung zwischen der Multimediaanalage (MM) und einer externen Einheit (EE) aufbaut.

2. Verfahren nach Anspruch 1,
**dadurch gekennzeichnet,** dass die Datenübertragung zwischen der Multimediaanlage (MM) und der externen Einheit (EE) in beide Übertragungsrichtungen über die Schnittstelleneinheit (SE) erfolgt, welche von der externen Einheit (EE) empfangene Daten an eine oder mehrere der Einheiten (E1, E2, E3, E4, E5) der Ringleitung (OB) über die Ringleitung (OB) weiterleitet und von einer oder mehreren der in der Ringleitung (OB) liegenden Einheiten (E1, E2, E3, E4, E5) emfangene Daten zur externen Einheit (EE) sendet.

3. Verfahren nach Anspruch 1 oder 2,
**dadurch gekennzeichnet,** dass die Schnittstelleneinheit (SE) Anfragen der in der Ringleitung (OB) liegenden Einheiten (E1, E2, E3, E4, E5) nach einer Funkverbindung zur externen Einheit (EE) koordiniert.

4. Verfahren nach Anspruch 3,
**dadurch gekennzeichnet,** dass bei gleichzeitigen Anfragen mehrerer in der Ringleitung (OB) liegender Einheiten nach einer Funkverbindung zur externen Einheit (EE) die Schnittstelleneinheit (SE) die Reihenfolge der abzuarbeitenden Anfragen nach der Reihenfolge der anfragenden Einheiten in der Ringleitung (OB) bestimmt.

5. Verfahren nach Anspruch 3,
**dadurch gekennzeichnet,** dass bei gleichzeitigen Anfragen mehrerer in der Ringleitung (OB) liegender Einheiten nach einer Funkverbindung zur externen Einheit (EE) die Schnittstelleneinheit (SE) die Reihenfolge der abzuarbeitenden Anfragen nach dem Zufallsprinzip bestimmt.

6. Multimediaanlage (MM) für ein Fahrzeug mit mehreren Einheiten (E1, E2, E3, E4, E5), die über einen als Ringleitung (OB) im Fahrzeug verlegten optischen Datenbus (OB) miteinander verbunden sind,
**dadurch gekennzeichnet,** dass mittels einer an beliebiger Stelle der Ringleitung (OB) liegenden Schnittstelleneinheit (SE) eine Funkverbindung zwischen der Multimediaanlage (MM) und einer externen Einheit (EE) aufbaubar ist.

7. Multimediaanlage nach Anspruch 6,
**dadurch gekennzeichnet,** dass in der Schnittstelleneinheit (SE) eine Koordinationseinheit vorgesehen ist, um die Anfragen der Einheiten (E1, E2, E3, E4, E5) in der Ringleitung (OB) nach Funkverbindungen zur externen Einheit (EE) zu koordinieren.

8. Verfahren nach einem der Ansprüche 1 bis 5 bzw. Multimediaanlage nach Anspruch 6 oder 7,
**dadurch gekennzeichnet,** dass die Schnittstelleneinheit (SE) als separate Einheit in der Ringleitung (OB) liegt.

9. Verfahren nach einem der Ansprüche 1 bis 5 bzw. Multimediaanlage nach Anspruch 6 oder 7,
**dadurch gekennzeichnet,** dass die Schnittstelleneinheit (SE) in einer der in der Ringleitung (OB) liegenden Einheiten (E5) integriert ist.

10. Verfahren bzw. Multimediaanlage nach einem der vorangehenden Ansprüche,
**dadurch gekennzeichnet,** dass die externe Einheit (EE) ein Dienstleistungszentrum ist.

11. Verfahren bzw. Multimediaanlage nach Anspruch 10,
**dadurch gekennzeichnet,** dass die externe Einheit (EE) Verkehrsinformationen aussendet und/oder empfängt.
